# EUROPEAN PATENT SPECIFICATION

(11) **EP 3 362 507 B1**
(45) Date of publication and mention of the grant of the patent: **04.12.2019**
(21) Application number: 16790288.1
(22) Date of filing: 14.10.2016
(51) Int. Cl.: C08J 11/04, C08J 11/08, B29B 17/02

(54) **METHOD FOR DECOLORIZING PLASTIC POLYOLEFIN MATERIAL**
VERFAHREN ZUR ENTFÄRBUNG VON KUNSTSTOFFPOLYOLEFINMATERIAL
PROCÉDÉ POUR DÉCOLORER UN MATÉRIAU POLYOLÉFINIQUE EN PLASTIQUE

(30) Priority: 16.10.2015 EP 15190216
(43) Date of publication of application: 22.08.2018
(73) Proprietor: SUEZ Groupe, 92040 Paris la Défense Cedex (FR)
(72) Inventor: WAUTERS, Frank, 9250 Waasmunster (BE); DE BRUYNE, Bram, 9140 Thielrode (BE)
(74) Representative: IPAZ
(86) International application number: PCT/EP2016/074790
(87) International publication number: WO 2017/064292

(56) References cited:
- EP-A1- 0 644 230
- EP-A1- 1 170 326
- DE-A1- 4 009 496
- DE-A1- 19 905 029

## Description

The invention relates to a method for decolorizing plastic polyolefin material and to the use of said decolorized material.

Low density polyethylene (LDPE) is a polyolefin, which is processed in large quantities for the manufacture of foils for packaging purposes. For example, shrink hoods, bags and the like are manufactured from the foils. High-density polyethylene (HDPE) is used in the production of plastic bottles, corrosion-resistant piping, geomembranes, and plastic lumber. Another polyolefin, polypropylene (PP), is used in a wide variety of applications including packaging and labeling, textiles (e.g., ropes, thermal underwear and carpets), stationery, plastic parts and reusable containers of various types, laboratory equipment, loudspeakers, automotive components, and polymer banknotes.

The recycling of colored polyolefinic articles is even more important than ever before, as the volume of thermoplastics and plastics discarded has proliferated in the last few decades. At the moment there is a great demand for more and more complex materials (composites, multilayers, ...) and for recycling these plastics, new and more complex technologies are needed.

Moreover a 100% recycled r-PP granule (before compounding) is sold at about 70 % of the price of a virgin "natural color" PP granule. Since in Europe, existing PP recyclers produce around 1000 kt/year of r-PP, finding a way to decolorize rPP would lead to an important added-value.

A colored polyolefinic plastic material that is to be recycled typically is washed, flaked or pelletized, and then supplied to a solid-state reactor in the process of converting waste plastic into various articles.

The recycling of colored polyolefinic plastic material leads to dark grey or black, and the one main bottleneck of said recycled granules today is that they must be compounded with virgin material in order to be able to be "recolorized" in their next life.

There exists a current and strong future need to remove the coloration from many types of thermoplastics, in particular from polyolefinic plastic material.

Several attempts have been made to remove color from colored plastic. Most common technique is the use of a solvent, followed by adding a non-solvent to precipitate the polymer again after a liquid solid separation. For example, FR 2 906 809 discloses a process for the purification of a polymer, in particular polyethylene (PE) or polypropylene (PP), said process comprising adding to an homogeneous medium containing said polymer, a non-solvent of said polymer to make the medium heterogeneous and recovering polymer particles from said heterogeneous medium.

Other methods use additives to improve liquid solid separations after solubilization of the polymer. For example US 6169121 provides a method for recycling a styrene resin including removing insoluble components in a solution resulting from dissolution of a styrene resin in an organic solvent by contacting an adsorbent with said solution, subsequently removing the organic solvent from the solution freed of the insoluble components such as moisture, sludge or the colorant, and recycling the resulting mass as a regenerated styrene resin. Said adsorbent may be clay which can be charged in a metal mesh column through which the solution is passed. Before passing through the column, the solution is heated, preferably to not lower than 40 °C and to not higher than 100 ° C.

DE 4009308 claims a method for cleaning a polymer solution wherein said solution is passed through a sand bed under pressure or not, the non-soluble impurities being retained in said bed. Said sand bed may contain coagulation agents like clays. The polymers are those which are dissolved without modification of the chemical bounds, in particular thermoplastic aromatic polycarbonates, polyacrylates or polystyrene.

WO03106546 discloses a method for removing heavy metals from plastic material, for example polyolefins, in particular PE, said method comprising dissolving the plastic material in an organic solvent like hexane or Exxol® D-30 from Exxon to obtain a solution having a concentration of polymer not more than 20 % in weight and hot filtering said solution on a cellulose filter with a porosity between 1 and 25 microns. Since heavy metals are used as pigments, the method leads to a decolorized polymer.

EP 0 644 230 discloses a method for reprocessing or reclaiming polyolefins and polyolefin-containing composite materials, by treatment with a solvent selected from cycloalkanes, n-alkanes, isoalkanes and mixture thereof in the presence of a surfactant. After the separation of insoluble components, the polyolefin solution and an aqueous surfactant solution are dispersed in one another. The dispersion obtained comprises precipitated polyolefin, an aqueous phase and an organic phase, which are separated in a manner known per se to recover the polyolefin under the form of granulates. Said method leads to higher quality polyolefin and the method in addition can be carried out more economically and in a more environmentally friendly manner.

Some of these known methods are not applicable to polyolefins and the one known for the decolorization of polyolefins have many drawbacks and there is a need for new methods.

The inventors have discovered that by using specific solvents, isoparaffinic solvents, they are able to have a method which is rapid and leads to decolorized material with low residual solvent. With said solvents the molecular chains of the polyolefins are not destroyed and the decolorized material has the same structure and the same physical features as a virgin one.

Thus a first object of the present invention is a method for decolorizing a polyolefin plastic material comprising the steps of:
a) providing said plastic polyolefin material in solid form comprising at least one pigment or at least one filler or a mixture thereof infused into said material, said at least one pigment or filler or mixture thereof imparting color to said polyolefin plastic material;
b) the polyolefin plastic material to be decolorized being processed to form smaller particles ;
c) dissolving said polyolefin plastic material in an isoparaffinic solvent, said isoparaffinic solvent comprising isoparaffins or mixtures thereof, said isoparaffins being branched alkanes of formula R-CH-(CH₃)₂, with R being an alkyl chain containing from 10 to 13 carbon atoms,
d) adding one or more additives selected from bleaching agents, filter aids and mixtures thereof ,
e) submitting the solution obtained in step d) to a hot liquid-solid separation step, said hot liquid-solid separation step being carried out at a temperature of between the boiling point of the solvent under the working pressure and the temperature at which the polymer is dissolved ; and
f) recovering the polymer out of the liquid phase.

Advantageously, the method further comprises after step c, a step for recovering the decolorized polyolefin plastic material.

According to the invention, polyolefin is any of a class of polymers produced from a simple olefin, in particular polypropylene or polyethylene. The terms "polyolefin" or "polymer" are equivalent thereafter.

According to the invention, pigments comprise all types of compounds currently used to give a color to a plastic material as for example organic or inorganic pigments.

According to the present invention, isoparaffinic solvents are hydrocarbons or mixtures of hydrocarbons that may be obtained by catalytic reforming of petrochemical bases. The flash point of these products is typically in the 45 to 65°C range which equals a boiling point of between 160°C and 220°C. Isoparaffinic solvents are virtually free of aromatics compounds, are completely saturated and are practically odorless. Such solvents have the following advantages:
- because they are high boiling solvents, the solubilization of the plastics is faster;
- because they have low solvency , they are more selective ,
- because they have low density and high viscosity reduction power, they are better solvent for the liquid/solid (L/S) separation by centrifugation,
- they have fast evaporation and low latent heat values.

Isoparaffins are branched alkanes of formula R-CH-(CH3)₂, with R being an alkyl chain. Isoparaffinic solvents according to the invention comprise the aforementioned compounds or mixtures thereof, with R being an alkyl chain containing from 10 to 13 carbon atoms.

According to the invention a suitable isoparaffinic solvent is a mix of hydrocarbons C₁₀-C₁₃ comprising at least 90,0%, preferentially at least 95,0% of isoparaffins, naphtenes preferentially less than 5,0%, and traces of aromatics (less than 0,1%, preferentially less than 0,01%) may also be present. Such suitable mixtures are commercially available for example under the name Isopar®L available from Exxon Corporation and the like i.e. isoparaffinic solvent with a boiling point > 160 °C and a flash point > 45 °C. Isopar®L has a boiling point of 185-213 °C and a flash point > 61 °C (63°C).

Unless otherwise mentioned, all percentages in the present description are weight percentages.

According to the invention, additives are bleaching agents, filter aids or mixtures thereof.

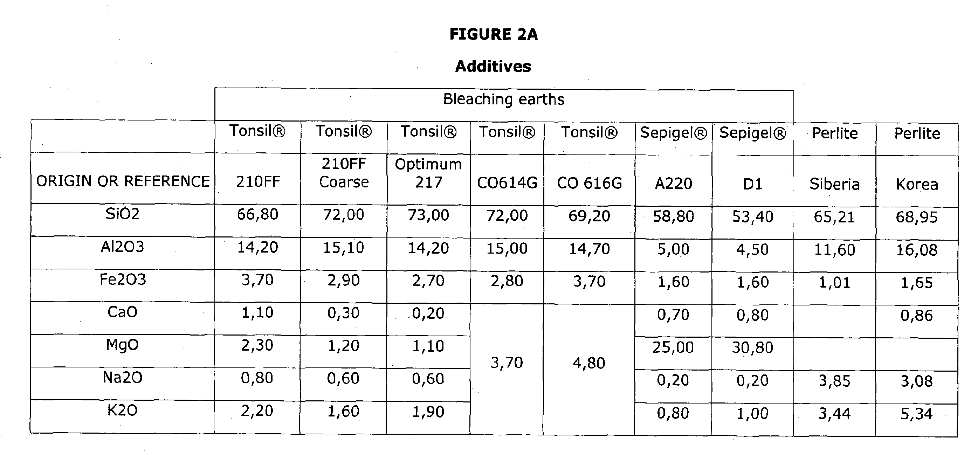

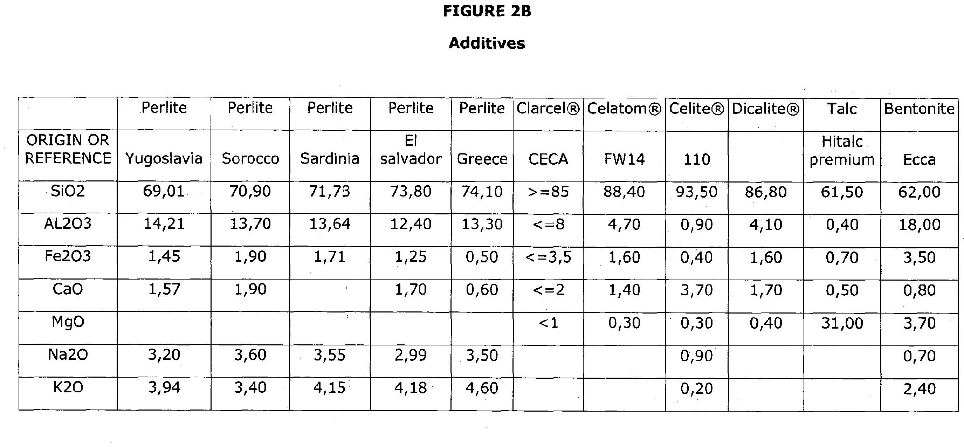

They may be for example bleaching earths, for example commercialized under trade name Tonsil or Sepigel, filter aids such as perlite or diatomaceous earths, for example commercialized under trade name Clarcel or Celatom. They may also be talc or bentonite. Examples of such additives are displayed in Figure 2.

Said additives are solid compositions comprising silicium oxide (SiO₂) as major compound, aluminium oxide (Al₂O₃) and/or magnesium oxide (MgO), and optionally, one or more oxides selected from iron III oxide (Fe₂O₃), calcium oxide (CaO), Sodium Oxide (Na₂O) and potassium oxide (K₂O). "Major compound" here as the usual meaning of a compound representing 50% or more, in weight, of the solid composition.

Said additives are solid compositions comprising from 50,0 to 90,0 % by weight of silicium oxide (SiO₂), from 5,0 to 40,0% of a compound or mixture of compounds selected from aluminium oxide (Al₂O₃) and magnesium oxide (MgO), from 0,0 to 5,0% of iron III oxide (Fe₂O₃), from 0,0 to 10,0% of a compound or mixture of compounds selected from calcium oxide (CaO), Sodium Oxide (Na₂O) and potassium oxide (K₂O).

A solid composition according to the invention is typically in a powdery form, or in the form of granules.

Typically, according to the invention, the additive or mixture of additives is used at a concentration between 0.1 and 5. 0% (weight %) in the liquid phase.

In an embodiment, said additives are bleaching agents selected from bleaching earths.

Said additives are solid composition comprising silicium oxide (SiO₂) as major compound, aluminium oxide (Al₂O₃) and/or magnesium oxide (MgO), iron III oxide (Fe₂O₃), potassium oxide (K₂O), and optionally, one or more oxides selected from calcium oxide (CaO), Sodium Oxide (Na₂O).

Said additives are solid composition comprising from 50,0 to 75,0 % by weight of silicium oxide (SiO₂), from 14,0 to 40,0% of a compound or mixture of compounds selected from aluminium oxide (Al₂O₃) and magnesium oxide (MgO), from 1,0 to 5,0% of iron III oxide (Fe₂O₃), from 0,5 to 5,0% of potassium oxide (K₂O), from 0,0 to 2,0% of a compound or mixture of compounds selected from calcium oxide (CaO) and Sodium Oxide (Na₂O).

According to the invention a suitable bleaching agent is sold under the trade name trade name Tonsil®. It may comprise from 65,0 to 75,0 % by weight of silicium oxide (SiO₂), from 14,0 to 16,0% of aluminium oxide (Al₂O₃), from 0,0 to 2,5% of magnesium oxide (MgO), from 2 to 4 % of iron III oxide (Fe₂O₃), from 1,0 to 5,0% of potassium oxide (K₂O), from 0,0 to 1,5% of calcium oxide (CaO) and), from 0,0 to 1,0% of sodium oxide (Na₂O).

According to the invention a suitable bleaching agent is sold under the trade name Sepigel®. It may comprise from 50,0 to 60,0 % by weight of silicium oxide (SiO₂), from 4,0 to 6,0% of aluminium oxide (Al₂O₃), from 20,0 to 35,0% of magnesium oxide (MgO), from 1,0 to 2,0% of iron III oxide (Fe₂O₃), from 0,5 to 1,5% of potassium oxide (K₂O), from 0,5 to 1,0% of calcium oxide (CaO) and), from 0,0 to 0,5% of sodium oxide (Na₂O).

As for example the following may be used, Sepigel ® A220, Sepigel® D1, Tonsil® 210FF, Tonsil® 210FF Coarse, Tonsil® 217, Tonsil® CO614G and Tonsil® CO 616G.

Bleaching earths are activated earths that are obtained by an acid activation process to confer them specific properties. They are particularly advantageous because of these essential properties (adsorptive capacity, acid properties, catalytic properties, ion exchange capacity and particle size distribution) which make them usable not only as adsorbant but also as filtration aid.

In an embodiment, said additives are perlite.

Said additives are solid composition comprising silicium oxide (SiO₂) as major compound, aluminium oxide (Al₂O₃), and optionally, one or more oxides selected from iron III oxide (Fe₂O₃), calcium oxide (CaO), Sodium Oxide (Na₂O) and potassium oxide (K₂O).

It may comprise from 65,0 to 75,0 % by weight of silicium oxide (SiO₂), from 10,0 to 17,0% of aluminium oxide (Al₂O₃), from 0,0 to 2,0 % of iron III oxide (Fe₂O₃), from 3,0 to 6,0% of potassium oxide (K₂O), from 0,0 to 2,0% of calcium oxide (CaO) and from 2,5 to 4,0% of sodium oxide (Na₂O).

In an embodiment, said additives are diatomaceous earths.

Said additives are solid composition comprising silicium oxide (SiO₂) as major compound and aluminium oxide (Al₂O₃) and iron III oxide (Fe₂O₃). Calcium oxide (CaO), magnesium oxide (MgO), may also be present.

Typically, diatomaceous earths comprise from 80,0 to 90,0%of silicium oxide (SiO₂), from 2,0 to 8,0% of aluminium oxide (Al₂O₃), from0,5 to 2% of iron III oxide (Fe₂O₃), between 0,0 and 2,0% of calcium oxide (CaO), and between 0,0 and 0,5 % of magnesium oxide (MgO).

According to the invention, the polyolefin plastic material to be decolorized is ground, shredded, cut, chopped or otherwise processed to form smaller particles prior to contacting the isoparaffinic solvent. It may be for example under the form of flakes or granules.

In a further embodiment according to the invention, during step c) one or more additives selected from filters aids or mixtures thereof are added to the solution before processing step d). Said additives are well known from the one skilled in the art and suitable additives are for example filter aids to improve filtration; examples include diatomaceous earth (for example Clarcel®), perlite and organic filter aids (for example Arbocel)®.

According to the invention, the hot liquid-solid separation step is carried out either by a centrifugation or by filtration. Liquid solid separation needs to be done at elevated temperature to keep the polymer solved in the solvent, i.e. having an homogeneous solution of polymer without flocculation. Maximum temperature for this liquid solid separation is the boiling point of the solvent under the working pressure and the minimum temperature is the temperature at which the polymer is solved. Under this minimum temperature, the polymer flocculates/precipitates with the inert materials (pigments, fillers, ...). By using the hot separation technique (centrifugation/decantation and or filtration), the dissolved polymer remains in the filtrate/centrifugate. The one skilled in the art is able to choose the temperature on the basis of his general knowledge in view of the solvent and of the polyolefin used. Where the hot liquid-solid separation step is realized under pressure, then it is possible to work at temperature above boiling point.

After the hot separation, the wet solid residue from centrifugation/filtration is vacuumdried for maximum solvent recovery. The recovered solvent may be reused in a later decolorization method.

The polymer is recovered out of the liquid phase. This can be performed in different ways which belong to the general knowledge of the one skilled in the art. The following technics are suitable: crystallization of the polymer in the solution by cooling down, crystallization of the polymer in the solution by cooling down and adding a nucleant like PE or PP powder, or crystallization of the polymer in the solution by cooling down and adding an agent able to change the polarity of the solute, in particular by adding a co-solvent like light alcohols in C₁-C₆(for example isopropylalcohol), mixtures of water and light alcohols in C₁-C₆, or esters, preferred a dibasic ester (for example dimethylglutarate, dimethyladipate, dimethylsuccinate or mixtures thereof)

After crystallization, a liquid solid separation is then typically done with a filter centrifuge whereafter the solid fraction (i.e. the polymer) is vacuumdried to remove the solvent from the polymer and to recover the solvent (vacuumdrying process, high viscous evaporator). When vacuumdrying is realized using temperatures below the melting point of the polyolefin (in practice up to 250°C for PP), a powder is released from the dryer. When vacuumdrying is realized using temperatures above the melting point of the polyolefin (in practice 180°C for PP), at the end a molten polymer is released from the dryer. This melt can directly be fed to an extruder, connected to a pelletizing machine, or directly be fed to a pelletizing machine.

The extruder is preferably equipped with a high vacuum device to extract residual solvent from the polymer melt.

Another object of the invention is a decolorized polyolefin plastic material obtainable from the method according to the invention wherein the residual solvent is less than 0.5%, advantageously less than 0.1%.

The decolorized plastic material according to the invention shows a reduction of the pigment based on TiO₂ of more than 89 %.

The decolorized polyolefin plastic material may be used in the same applications as virgin except food application. It can be used for example for textiles (e.g., ropes, thermal underwear and carpets), plastic parts and reusable containers of various types, laboratory equipment, loudspeakers, automotive components, and polymer banknotes.

Thus another object of the invention is an article, made from a decolorized polyolefin plastic material obtainable from the method according to the invention wherein the residual solvent is less than 0.5%, advantageously less than 0.1%. In an embodiment, such articles exclude articles for food applications.

Other characteristics and advantages of the invention appear from the following description of a preferred embodiment with reference to the accompanying drawings but which is no way limiting. In these drawings:

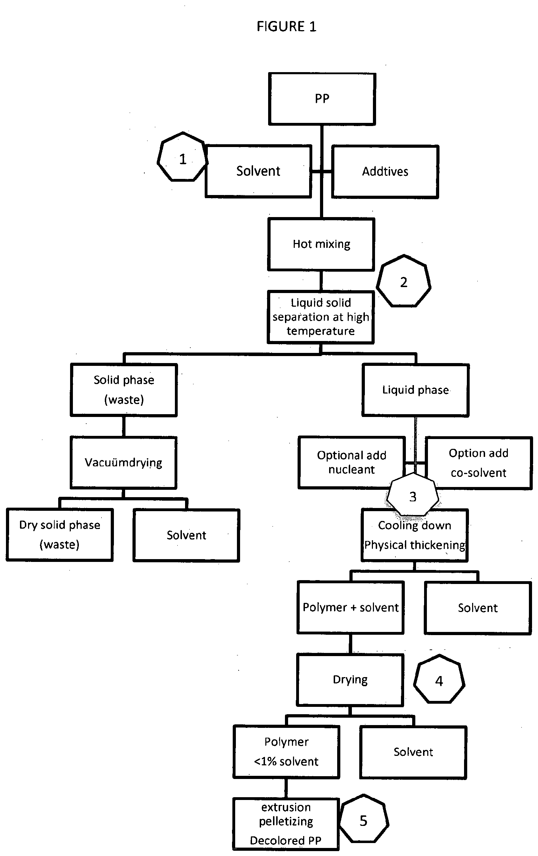

Figure 1 is the basic scheme of the process applied to polypropylen (PP).
   Step 1: Solubilization of the plastic is needed to liberate the solid pigment particles from the resin. Flakes, granulate of polypropylene are solved in a ratio 1/10 to 1/15 (parts PP/parts solvent). Solvent used is isoparaffinic hydrocarbon mixture, C₁₁-C₁₃ (typical Isopar L).
   Additives are added to improve filtration and or centrifugation capacity and quality. Additives used: Bleaching earth (typical Tonsil Optimum 210FF®) is added to the liquid solution in a ratio of 0.1 and 5% on liquid phase. Other filter aids to improve filtration can be added like diatomous earths (Clarcel DIF\BO®), Celatom®, Celite®, Dicalite®.
   Reaction time: 10-30 minutes at a temperature between 70-160°C,
   Step 2: Liquid solid separation needs to be done at elevated temperature to keep the polymer solved in the solvent. Minimum temperature for this liquid solid separation was set at a temperature at which there is no flocculation of the polymer. The dissolved polymer remains in the filtrate/centrifugate.
   Step 3: PP Recovery from solvent/PP mix. This can be performed by crystallization of the polymer in the solution by cooling down ; cooling down may be done in presence of a nucleant (preferred pure PP powder) or in presence of a co-solvent like a dibasic ester.
   Step 4: Drying of the solid phase and removal of the residual solvent from the polymer polypropylene to less than 0.5%, preferred 0.1% and obtaining a melt
   Step 5: The melt from drying is directly fed to a pelletizing machine.
Figure 2A and 2B give the additives which may be used according to the invention. For each additive, the reference of the supplier or the origin and the composition are indicated; the quantity of each component is expressed as % on the whole dry composition. For Tonsil® CO614G and CO 616G, the respective values 3,70 and 4,80 correspond to the sum of CaO, MgO, NA2O and K2O.

### EXAMPLE

45 kg of mixed PP flakes was dissolved in 675 kg of Isopar L at 150°C in 30 min.

After dissolution, the solution was cooled down to 130°C, 12 kg of bleaching earth type Tonsil 210FF was added and mixed during 30min.

A hot liquid/solid separation was performed at 110°C with a GEA Atex decanter.

The centrifugate was cooled down, the polymer crystallized and most part of solvent was removed from the polymer with a filter centrifuge.

The polymer cake was vacuum dried to less than 0,1% of residual solvent

A dry and colorless polymer was obtained in the form of a powder.

Further, the powder was extruded and pelletized.

XRF analysis on the decolorized PP pellets showed a reduction of +89% of the pigments (based on TiO2).

## Claims

1. A method for decolorizing a polyolefin plastic material comprising the steps of:
a) providing said plastic polyolefin material in solid form comprising at least one pigment or at least one filler or a mixture thereof infused into said material, said at least one pigment or filler or mixture thereof imparting color to said polyolefin plastic material;
b) the polyolefin plastic material to be decolorized being processed to form smaller particles ;
c) dissolving said polyolefin plastic material in an isoparaffinic solvent, said isoparaffinic solvent comprising isoparaffins or mixtures thereof, said isoparaffins being branched alkanes of formula R-CH-(CH₃)₂, with R being an alkyl chain containing from 10 to 13 carbon atoms,
d) adding one or more additives selected from bleaching agents, filter aids and mixtures thereof ,
e) submitting the solution obtained in step d) to a hot liquid-solid separation step, said hot liquid-solid separation step being carried out at a temperature of between the boiling point of the solvent under the working pressure and the temperature at which the polymer is dissolved ; and
f) recovering the polymer out of the liquid phase.

2. A method according to claim 1 further comprising after step c), a step for recovering polyolefin plastic material.

3. A method according to claim 1or 2 where additives are selected from bleaching earths, perlite and diatomaceous earth.

4. A method according to claim 2 to 3 wherein the recovering step is comprises a crystallization step selected from the following methods:
a) crystallization of the polymer by cooling down,
b) crystallization of the polymer by cooling down and adding a nucleant or
c) crystallization of the polymer by adding a co-solvent selected from light alcohols C₁-C₆, mixtures of water and light alcohols C₁-C₆ and esters.

5. A method according to any of claim 2 to 4 further comprising a step for removing the residual solvent from the decolorized polyolefin plastic material by filter centrifugation followed by vacuum drying of the solid fraction either to obtain a powder optionally transformed in a melt or to obtain directly a melt.

6. A method according to anyone of the preceding claims wherein the polyolefin plastic material to be decolorized is under the form of flakes or granules.

7. A method according to anyone of the preceding claims, wherein the hot liquid-solid separation step is realized either by a centrifugation or by filtration.

8. A method for preparing granulates from a decolorized polyolefin plastic material obtained by the method according to claim 4 to 7 wherein a melt of decolorized polyolefin plastic material is directly obtained and directly fed to a pelletizing machine.

9. A method according to claim 8 where the pelletizing machine is connected with an extruder equipped with high vacuum device.

## Patentansprüche

1. Verfahren zur Entfärbung eines Polyolefinkunststoffmaterials umfassend die folgenden Schritte:
a) Bereitstellung eines Kunststoffpolyolefinmaterials in Festform, welches mindestens ein Pigment oder mindestens einen Füller oder eine Mischung daraus umfasst, welches/r in das Material getränkt wird, wobei das mindestens eine Pigment oder Füller oder Mischung daraus dem Polyolefinkunststoffmaterial Farbe verleiht;
b) Verarbeiten des zu entfärbenden Polyolefinkunststoffmaterials, um kleinere Teilchen zu bilden;
c) Lösen des Polyolefinkunststoffmaterials in einem isoparaffinischen Lösungsmittel, wobei das isoparaffinische Lösungsmittel Isoparaffine oder Mischungen daraus umfasst, wobei die Isoparaffine verzweigte Alkane der Formel R-CH-(CH₃)₂ sind, wobei R eine Alkylkette ist, die 10 bis 13 Kohlenstoffatome enthält,
d) Beifügen von einem oder mehreren Zusatzstoffen, ausgewählt aus Bleichmitteln, Filterhilfen und Mischungen daraus,
e) Unterziehen der in Schritt d) erhaltenen Lösung einem heißen Flüssig-Fest-Trennschritt, wobei der heiße Flüssig-Fest-Trennschritt bei einer Temperatur zwischen dem Kochpunkt der Lösung unter dem Arbeitsdruck und der Temperatur, bei welcher sich das Polymer löst, durchgeführt wird; und
f) Rückgewinnung des Polymers aus der Flüssigphase.

2. Verfahren nach Anspruch 1, wobei nach Schritt c) ein Schritt zur Rückgewinnung von Polyolefinkunststoffmaterial umfasst ist.

3. Verfahren nach Anspruch 1 oder 2, wobei Zusatzstoffe ausgewählt sind aus Bleicherden, Perlit und Diatomeenerde.

4. Verfahren nach Anspruch 2 bis 3, wobei der Rückgewinnungsschritt einen Kristallisationsschritt umfasst, der aus den folgenden Verfahren ausgewählt ist:
a) Kristallisation des Polymers durch Abkühlung,
b) Kristallisation des Polymers durch Abkühlung und Hinzufügen eines Nukleierungsmittels oder
c) Kristallisation des Polymers durch Hinzufügen eines Co-Lösungsmittels ausgewählt aus leichten Alkoholen C₁-C₆, Mischungen aus Wasser und leichten Alkoholen C₁-C₆ und Estern.

5. Verfahren nach einem der Ansprüche 2 bis 4, weiter umfassend einen Schritt zur Entfernung des verbleibenden Lösungsmittels aus dem entfärbten Polyolefinkunststoffmaterials durch Filterzentrifugierung, gefolgt von einer Vakuumtrocknung des Feststoffanteils, entweder um ein Pulver zu erhalten, welches optional in eine Schmelze transformiert wird, oder um direkt eine Schmelze zu erhalten.

6. Verfahren nach einem der vorhergehenden Ansprüche, wobei das zu entfärbende Polyolefinkunststoffmaterial in Form von Flocken oder Granulat vorliegt.

7. Verfahren nach einem der vorhergehenden Ansprüche, wobei der heiße Flüssig-Fest-Trennschritt entweder mittels einer Zentrifugierung oder durch Filtration durchgeführt wird.

8. Verfahren zur Bereitstellung von Granulaten aus einem entfärbten Polyolefinkunststoffmaterial, welches durch das Verfahren nach Anspruch 4 bis 7 erhalten wird, wobei eine Schmelze von entfärbtem Polyolefinkunststoffmaterial direkt erhalten wird und direkt einer Pelletmaschine zugeführt wird.

9. Verfahren nach Anspruch 8, bei dem die Pelletmaschine mit einem Extruder verbunden ist, der mit einem Hochvakuumgerät ausgestattet ist.

## Revendications

1. Procédé de décoloration d'une matière plastique polyoléfine comprenant les étapes de :
a) fourniture de ladite matière plastique polyoléfine sous forme solide comprenant au moins un pigment ou au moins une charge ou un mélange de ceux-ci infusé dans ladite matière, ledit au moins un pigment ou charge ou mélange de ceux-ci communiquant une couleur à ladite matière plastique polyoléfine ;
b) la matière plastique polyoléfine à décolorer étant traitée pour former de plus petites particules ;
c) la dissolution de ladite matière plastique polyoléfine dans un solvant isoparaffinique, ledit solvant isoparaffinique comprenant des isoparaffines ou des mélanges de celles-ci, lesdites isoparaffines étant des alcanes ramifiés de formule R-CH-(CH₃)₂, R étant une chaîne alkyle contenant de 10 à 13 atomes de carbone,
d) l'addition d'un ou plusieurs additifs choisis parmi les agents de blanchiment, les adjuvants de filtration et leurs mélanges,
e) la soumission de la solution obtenue dans l'étape d) à une étape de séparation liquide-solide à chaud, ladite étape de séparation liquide-solide à chaud étant réalisée à une température entre le point d'ébullition du solvant sous la pression de service et la température à laquelle le polymère est dissous ; et
f) la récupération du polymère à partir de la phase liquide.

2. Procédé selon la revendication 1, comprenant en outre après l'étape c), une étape de récupération de matière plastique polyoléfine.

3. Procédé selon la revendication 1 ou 2, dans lequel des additifs sont choisis parmi les terres décolorantes, la perlite et la terre de diatomées.

4. Procédé selon la revendication 2 ou 3, dans lequel l'étape de récupération comprend une étape de cristallisation choisie parmi les procédés suivants :
a) cristallisation du polymère par refroidissement,
b) cristallisation du polymère par refroidissement et ajout d'un nucléant, ou
c) cristallisation du polymère par ajout d'un co-solvant choisi parmi les alcools légers en C₁ à C₆, des mélanges d'eau et d'alcools légers en C₁ à C₆ et des esters.

5. Procédé selon l'une quelconque des revendications 2 à 4, comprenant en outre une étape d'élimination du solvant résiduel de la matière plastique polyoléfine décolorée par centrifugation sur filtre suivie par un séchage sous vide de la fraction solide soit pour obtenir une poudre facultativement transformée en une matière fondue soit pour obtenir directement une matière fondue.

6. Procédé selon l'une quelconque des revendications précédentes, dans lequel la matière plastique polyoléfine à décolorer se présente sous la forme de flocons ou granulés.

7. Procédé selon l'une quelconque des revendications précédentes, dans lequel l'étape de séparation liquide-solide à chaud est effectuée soit par une centrifugation soit par filtration.

8. Procédé de préparation de granulés à partir d'une matière plastique polyoléfine décolorée obtenue par le procédé selon la revendication 4 à 7, dans lequel une matière fondue de matière plastique polyoléfine décolorée est directement obtenue et directement amenée vers une machine à pastiller.

9. Procédé selon la revendication 8, dans lequel la machine à pastiller est raccordée à une extrudeuse équipée d'un dispositif à vide élevé.
